## Europäisches Patentamt
## European Patent Office
## Office européen des brevets

(11) Veröffentlichungsnummer: **0 193 835**
**B1**

(12) **EUROPÄISCHE PATENTSCHRIFT**

(45) Veröffentlichungstag der Patentschrift: 02.05.90

(21) Anmeldenummer: 86102390.1

(22) Anmeldetag: 24.02.86

(51) Int. Cl.⁵: **H 04 B 3/46, H 04 L 12/26**

(54) Anordnung zum Sammeln von Überwachungsinformationen in Übertragunseinrichtungen.

(30) Priorität: 27.02.85 DE 3506945

(43) Veröffentlichungstag der Anmeldung:
10.09.86 Patentblatt 86/37

(45) Bekanntmachung des Hinweises auf die
Patenterteilung:
02.05.90 Patentblatt 90/18

(84) Benannte Vertragsstaaten:
AT BE CH DE FR GB IT LI NL SE

(56) Entgegenhaltungen:

PATENTS ABSTRACTS OF JAPAN, Band 4, Nr.
137 (E-27) 619r, 25. September 1980, Seite 103 E
27; & JP - A - 55 90 160 (NIPPON DENKI K.K.)
08.07.1980
PATENTS ABSTRACTS OF JAPAN, Band 8, Nr.
131 (E-251) 1568r, 19. Juni 1984, Seite 166 E 251;
& JP - A - 59 43 639 (CHIYUUBU DENRIYOKU
K.K.) 10.03.1984

(73) Patentinhaber: Siemens Aktiengesellschaft
Wittelsbacherplatz 2
D-8000 München 2 (DE)

(72) Erfinder: Drügh, Paul, Dipl.-Phys.
Stockmannstrasse 28
D-8000 München 71 (DE)
Erfinder: Schmidt, Volker, Dipl.-Ing.
Stiftsbogen 14
D-8000 München 70 (DE)

(56) Entgegenhaltungen:

TECHNISCHE MITTEILUNGEN AEG-
TELEFUNKEN, Band 58, Nr. 3, 1968, Seiten
191-192, Berlin, DE; W. ANKENBRAND:
"Automatische Trägerfrequenz-
Netzüberwachung"

Courier Press, Leamington Spa, England.

EP 0 193 835 B1

**Beschreibung**

Die Erfindung bezieht sich auf eine wie im Oberbegriff des Patentanspruchs 1 angebene Anordnung zum Sammeln von Eigenüberwachungsinformationen in Übertragungseinrichtungen der elektrischen Nachrichtenübertragungstechnik.

Eine derartige Anordnung ist bereits aus Patent Abstracts of Japan, Band 8, Nr. 131 (E—251) (1568), 19. Juni 1984, Seite 166 E 251; & JP—A—59 43 639 (Chiyuubu Denriyoku K.K.) 10.3.84 bekannt. Die bekannte Anordnung dient zur Fehlerüberwachung einer Übertragungsstrecke. Um einen bedeutenden Fehler im voraus zu verhindern, wird bei Auftreten eines Fehlersignals ein digitaler Speicher veranlaßt, an Meßpunkten gemessene Meßwerte zu speichern. Diese Meßwerte können mittels eines Modems und einer Übertragungsstrecke übertragen werden. Die Fehlersignalinformation wird auf mehreren Speichern gespeichert, so daß sie für eine spätere Ausgabe zur Verfügung steht.

Eine Signalsammeleinrichtung, bei der Signalsammler Baugruppen einer Übertragungseinrichtung der elektrischen Nachrichtenübertragungstechnik fortlaufend abfragen und die dabei gewonnenen Uberwachungsinformationen fortlaufend an eine Zentralstation zur zentralen Betriebsbeobachtung weitergeben, ist dabei offenbar nicht vorgesehen. Tritt kein Fehlersignal auf, so werden auch keine Meßwerte gespeichert.

Ferner ist bereits aus Technische Mitteilungen AEG-Telefunken, Band 58, Nr. 3, 1968, Seiten 191—192, Berlin, DE; W. Ankenbrand "Automatische Trägerfrequenz-Netzüberwachung" eine Einrichtung zur automatischen Trägerfrequenz-Netzüberwachung bekannt, mit deren Hilfe Störungen an die TF-Verbindungswegen automatisch identifiziert, gemeldet und registriert werden sollen. Insbesondere soll der Betriebszustand eines Fernleitungsnetzes von einer zentralen Stelle aus erkennbar sein. Dabei wird nur die Störung des ausgefallenen Übertragungsweges gemeldet. Eingegangene Störungsmeldungen werden bis zur Abfrage gespeichert. Mit Hilfe zweier zyklisch umlaufender Suchwähler wird ein Alt-/Neu-Vergleich der Störungsmeldungen vorgenommen. Meßwerte werden nicht als solche erfaßt.

Ferner wurde in der älteren, nicht vorveröffentlichten deutschen Patentanmeldung mit dem Aktenzeichen P 34 36 435.8 bereits eine Anordnung vorgeschlagen, die es gestattet, Überwachungsinformationen mehrerer nachrichtentechnischer Geräte oder Nachrichtenübertragungseinrichtungen zu sammeln, mittels einer Signalsammeleinrichtung an eine Zentrale zu übermitteln und in einer zentralen Auswerteeinrichtung auszuwerten. Solche Überwachungsinformationen können z.B. Pilotalarme bei analoger oder Codefehleralarme bei digitaler Nachrichtenübertragung sein.

Aus E. Diggelmann, B. Lüscher: "Die Alarmregistrieranlage AREGA A 150", Hasler-Mitteilungen Nr. 3, 1975, Seiten 77 bis 88 ist es bereits bekannt, einen prozeßrechner für die periodische Abfrage einer großen Zahl von Eingängen einzusetzen, um möglichst genaue Aussagen über das Störverhalten eines Übertragungsnetzes zu erhalten. Die bekannte Anlage enthält ein Abtastsystem. Dieses Abtastsystem besteht aus einer Abtaststeuereinheit und bis zu vier Abtastmultiplexern. Die Multiplexer erlauben ein gruppenweises Abfragen der Signalzustände durch die Abtaststeuereinheit, die unter anderem die Aufgabe hat, diese mit den Zuständen des vorhergehenden Abtastzyklus zu vergleichen und alle Abweichungen in besonderer Form in einen Leitungsnummernspeicher einzuschreiben, wo sie weiter verarbeitet werden.

Für jede zu überwachende Linie werden zwei Signale an die Alarmregistrieranlage herangeführt. Diese beiden Signale können nur zwei Zustände aufweisen. Das eine Signal besagt, ob eine Linie gestört oder ungestört ist, das andere, ob eine Alarmglocke ein- oder ausgeschaltet ist. Bei der Auswertung werden die Störungen je nach Dauer in drei Klassen eingeteilt. Außerdem werden Folgemeldungen unterdrückt.

Vergleichsweise häufige Fehleralarme, bei der Nachrichtenübertragung festgestellte Fehler oder Störungen können Anlaß dafür sein, daß eine Nachrichtenübertragungsstrecke einer besonderen Beobachtung unterworfen wird. So kann man z.B. bei vergleichsweise häufigen Fehleralarmen in einem Digitalsystem an einer geeigneten Stelle einer Übertragungseinrichtung einen Codefehlermeßplatz bzw. einen Meßplatz zur Erfassung der falschen Rahmenkennungswörter installieren und die Meßergebnisse anhand eines Streifendruckerprotokolls auswerten. Insbesondere kann man dabei überprüfen, ob die jeweiligen Anforderungen an die Übertragungsqualität, wie sie durch die Spezifikation CCITT G821 oder dgl. vorgeben sein können, erfüllt werden. Selbst bei einer Auswertung durch einen in den Meßplatz einbezogenen Computer ist dies jedoch insbesondere dann mit einem erheblichen Aufwand verbunden, wenn viele Übertragungssysteme gleichzeitig überwacht werden sollen.

Aufgabe der Erfindung ist es daher, eine wie im Oberbegriff des Patentanspruches 1 angegebene Anordnung derart auszubilden, daß in möglichst wirtschaftlicher Weise sowohl Störungsmeldungen gesammelt als auch laufend weitere Kriterien für die Qualität der überwachten Übertragungseinrichtungen gewonnen werden können.

Gemäß der Erfindung wird die gestellte Aufgabe in der im kennzeichnenden Teil des Patentanspruches 1 angegebenen Weise gelöst.

Dabei könen alle oder nur besonders dringende Störungsmeldungen der Signalisierungseinrichtung zugeführt werden. Gegebenenfalls kann die Auswerte- und Speichervorrichtung aus Meßwerten weitere Störungsmeldungen ableiten und an den Signalsammler zur Weiterleitung an die Signalisierungseinrichtung abgeben. Die Speichereinrichtung kann gegebenenfalls zusätzlich zu den Meßwerten Störungsmeldungen speichern und für einen allfälligen Abruf bereithalten. Als Auswertevorrichtung, die die gesammelten Informationen im Hinblick auf die zu registrierenden Daten auswertet, dient vorzugsweise ein Mikrocomputer.

Die Meßwerte können insbesondere Codefehler, Synchronausfälle, Rauschpegel oder dergleichen sein. Für diese Meßwerte sind in den zu überwachenden Geräten Meßvorrichtungen vorgesehen, die gegebenenfalls eine Vorverarbeitung von Rohdaten bzw. von originären Meßwerten vornehmen können. Die Meßwerte können in den Geräten und/oder in den Auswerte- und Speichervorrichtungen mit vorgegebenen Grenzwerten verglichen werden, um Störungsmeldungen zu bilden. Dabei können dringende oder weniger dringende Alarme unterschieden werden. Eine Bildung von Störungsmeldungen in einer an den Signalsammler angeschlossenen Auswertevorrichtung hat den Vorteil, daß zusätzliche oder geänderte Alarmkriterien ohne Änderung der überwachten Geräte berücksichtigt werden können.

Durch diese Maßnahmen ergibt sich der Vorteil, daß in Nachrichtenübertragungseinrichtungen mit einer Vielzahl von Baueinheiten auf besonders wirtschaftliche Weise zusätzlich zu Störungsmeldungsinformationen weitere Kriterien gesammelt und zur allfälligen weiteren Auswertung bereitsgehalten werden können, die nähere Aufschlüsse über die Übertragungsqualität der überwachten Übertragungseinrichtungen geben. Von besonderem Vorteil ist, daß mit vergleichsweise sehr geringem Aufwand eine laufende Überwachung der Übertragungsqualität möglich ist und dabei die anfallende Datenmenge klein gehalten wird, weil nur im Bedarfsfall, z.B. bei einem Hinweis eines Kunden, abgefragt und dokumentiert zu werden braucht. Ein ganz wesentlicher Vorteil besteht darin, daß z.B. bei Hinweis eines Kunden die Meßwerte schon vorliegen, während man sonst in der Regel mit Meßgeräten erst eine langwierige Messung starten muß, um die Übertragungsqualität der Verbindung zu überprüfen. Im Zweifelsfall kann es entscheidend sein, daß die Registriereinrichtung denjenigen Zeitraum erfaßt hat, auf den sich der Hinweis bezieht. Dies wird nur durch eine dauernde Qualitätsüberwachung ermöglicht.

Die dezentral gespeicherten Überwachungsinformationen lassen sich bei Bedarf auswerten. Die Anwendung kann mit Hilfe eines unmittelbar angeschlossenen Personalcomputers erfolgen oder dadurch vorgenommen werden, daß die gespeicherten Informationen an eine zentrale Auswerteeinrichtung übertragen oder dem in diesem Fall z.B. als Blasenspeicher (Bubblespeicher) ausgebildete Speicher der betreffenden Auswerte- und Speichervorrichtung entnommen und in Verbindung mit einer Auswertevorrichtung ausgewertet wird.

Die laufende Registrierung der für die Übertragungsqualität maßgeblichen Meßwerte findet über einen geeigneten Zeitraum statt, der vorzugsweise mehrere Tage umfaßt. Ein Abruf und eine Auswertung der registrierten Daten finden insbesondere nur aus gegebenem Anlaß statt. Insbesondere kann man sich z.B. bei Hinweisen von Telefon- oder Datenübertragungs-Kunden nachträglich Klarheit über eventuelle Störungsereignisse verschaffen.

Die Überwachung digitaler Verbindungen orientiert sich an der CCITT-Spezifikation G821, die für den Anteil der mit Bitfehlern behafteten Sekunden und Minuten bestimmte Werte vorschreibt. Als Bezugszeitraum wird mindestens eine Woche angenommen, auch die Auswertung mit der Bezugszeit 1 Tag kann zweckmäßig sein.

Vorteilhafte Ausgestaltungen der Erfindung ergeben sich aus den Unteransprüchen.

Die Maßnahmen nach Anspruch 2 haben den Vorteil, daß die Auswerte- und Speichervorrichtungen an eine Signalsammeleinrichtung angeschlossen werden können, ohne daß diese geändert zu werden braucht. Zweckmäßigerweise enthalten die von den zu überwachenden Geräten zum Signalsammler übertragenen Informationen die Adressen der meldenden Geräte. Gegebenenfalls kann die erforderliche Zuordnung auch durch Abzählen der von den einzelnen Geräten abgegebenen Impulstelegramme vorgenommen werden.

Im Fall der Abgabe der Informationen an die zentrale Auswerteeinrichtung sendet die Signalsammeleinrichtung zusammen mit den Daten die Adressen der Geräte sowie die eigene, die vorzugsweise mit der Adresse des zugeordneten Signalsammlers übereinstimmt.

Die Ausführungsform nach Anspruch 3 erfordert zwar einen entsprechenden Anschluß am Signalsammler. Sie bietet jedoch in vorteilhafter Weise die Möglichkeit, im Signalsammler gegebenenfalls eine Vorverarbeitung der Daten vorzunehmen. Außerdem können Störungsmeldungen, die in der Auswerte- und Speichervorrichtung aus den Meßwerten gewonnen werden, an den Signalsammler zur Weiterleitung an die Signalisierungseinrichtung abgegeben werden.

Bei der Ausbildung nach Anspruch 4 kann die gemeinsame Aufnahmevorrichtung eine Gestellreihe oder ein Gestell, insbesondere der Bauweise 7R sein. Die Auswerte- und Speichervorrichtung stellt dabei nur eine Zusatzbaugruppe dar; die Bestückung der Gestelleinheit erfolgt also auch hier nur bei Bedarf.

Man kann in der Signalsammeleinrichtung vorsehen, daß die Zentrale zu Zeiten, in denen keine Störmeldungen vorliegen, eine Übermittlung von Meßwerten über die Signalsammeleinrichtung veranlaßt, wobei dann per Interrupt sichergestellt wird, daß die Übertragung von Störungsmeldungen Vorrang hat.

Bei einer Ausgestaltung der Anordnung nach Anspruch 5 ist dagegen ein eigenes Meßwertübertragungsnetz vorgesehen. Dieses besteht vorzugsweise aus einem Meldebus. Der Aufruf der gespeicherten Überwachungsinformationen kann dabei über einen zusätzlich zum Meldebus vorgesehenen Aufrufbus oder über die Befehlsrichtung der Signalsammeleinrichtung vorgenommen werden.

Die Weiterbildung nach Anspruch 6 gestattet es in vorteilhafter Weise, Störungsmeldungen und Meßwerte gemeinsam zu beobachten, insbesondere dadurch, daß im Falle von Störungsmeldungen eine entsprechende Beobachtung zugeordneter Meßwerte eingeleitet wird.

Durch die Maßnahmen nach Anspruch 7 ergibt sich eine rationelle Erfassung von Störungsmeldungen in Verbindung mit einem unmittelbaren Zugriff zu den in den Speichervorrichtungen gespeicherten Meßwerten.

Die Weiterbildung nach Anspruch 8 gestattet es, die Meßwerte und die Störungsmeldungen auf besonders einfache Weise zu trennen.

Besondere Vorteile hinsichtlich der Verdrahtung bietet die Ausgestaltung nach Anspruch 9. Dabei bilden Signalisierungsbaugruppen ein streifenartiges Signalfeld, wie es z. B. aus dem deutschen Gebrauchsmuster G 70 32 240 an sich bekannt ist.

Die Erfindung wird anhand der in den Figuren dargestellten Ausführungsbeispiele näher erläutert.

Es zeigen

Fig. 1 und 2 Schaltungsanordnungen zum Sammeln von Störungsmeldungsinformationen und von Meßwertsignalen und

Fig. 3 ein mit einer Einrichtung nach Fig. 1 bzw. 2 erstelltes Protokoll, aus dem Qualitätsmerkmale einer überwachten Nachrichtenübertragungseinrichtung hervorgehen.

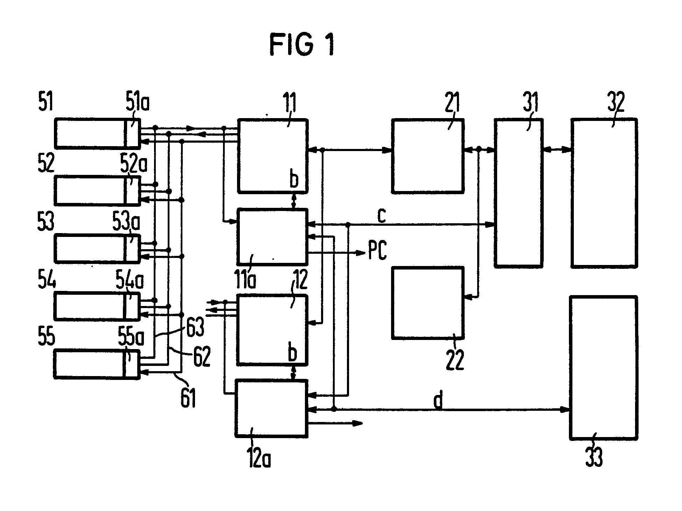

Fig. 1 zeigt eine Signalerfassungseinrichtung mit einem Datennetz von Baumstruktur. Die Stationen sind in mehreren Netzebenen angeordnet. An die Datenverarbeitungsanordnung 32 ist die Station 31 der dritten Netzebene angeschlossen. An die Station 31 sind die Stationen der zweiten Netzebene angeschlossen, von denen in der Figur nur die Stationen 21 und 22 gezeigt sind. Die Zahl der Stationen der zweiten Netzebene kann z.B. ≤ 120 sein.

An die Stationen 21 und 22 der zweiten Netzebene sind jeweils mehrere Stationen angeschlossen, von denen in der Figur nur die an den Signalsammler 21 angeschlossenen Stationen 11, 12 gezeigt sind. Die Zahl der Stationen der ersten Netzebene, die jeweils an eine Station der zweiten Netzebene angeschlossen sind, kann z.B. ebenfalls n ≤ 120 sein.

An jede Station der ersten Netzebene sind mehrere Signalgeber angeschlossen. Von diesen sind nur die an den Signalsammler 11 angeschlossenen Signalgeber 51a ... 55n der Einsätze 51 ... 55 einer Nachrichtenübertragungseinrichtung dargestellt. Die Zahl der an eine Station der ersten Netzebene angeschlossenen Signalgeber beträgt z.B. m ≤ 16.

Die Stationen sind jeweils über Busleitungen, die im Vollduplex- oder Halbduplexbetrieb betrieben werden, verbunden.

Am Stamm bzw. Kopf des Netzes befindet sich die Station 32, an den Ausläufern liegen die Signalgeber. Die Stationen der ersten und zweiten Netzebene befinden sich jeweils an einem Knoten des Datennetzes.

Die Signalgeber 51a ... 55n sind über den Adressenbus 61 und den Meldebus 63 an den Signalsammler II angeschlossen. Außerdem ist jeder Signalgeber über einen Steuerbus 62 an den zugeordneten Signalsammler angeschlossen. Die Funktion des Adressenbusses kann auch von Befehlsleitungen übernommen werden, die sternförmig von SISA1 zu den Geräten führen.

Die in Fig. 1 gezeigte Signalerfassungseinrichtung erfaßt — soweit bis hierhin beschrieben Einzelsignale. Diese Einzelsignale geben insbesondere den Zustand von Geräten oder Gerätefunktionen einer hinsichtlich ihres Betriebszustandes überwachten Einrichtung oder Anlage an. Dies ist im beschriebenen Beispiel eine Endstelle einer Nachrichtenübertragungseinrichtung.

Im Idealzustand herrscht störungsfreier Betrieb und alle Signalquellen haben den Zustand log. 0. Tritt an irgendeiner Stelle der überwachten Einrichtung ein Fehler auf, so wird dies durch eine log. 1 gemeldet.

Die Signalsammler 11, 12, die insbesondere durch Mikroprozessor-Schaltungen gebildet sind, sammeln Störungsmeldungsinformationen und geben diese an eine zentrale Datenverarbeitungseinrichtung weiter. Dabei werden vom Signalsammler 11 z.B. Telegramme von den zu überwachenden Geräten 51—55 empfangen. Die Telegramme werden von Überwachungseinrichtungen 51a ... 55a, die in diese Geräte integriert sind, jeweils auf eine Abfrage durch den betreffenden Signalsammler hin ausgesendet. Im Ausführungsbeispiel nach Fig. 1 sind die zu überwachenden Geräte Einsätze mit je sechs 2-Mbit-Leitungsendgeräten und dem Überwachungsteil. In entsprechender Weise können Geräte anderer Nachrichtenübertragungseinrichtungen überwacht werden.

Der Signalsammler 11 bzw. 12 wertet die empfangenen Telegramme nach Störungsmeldungen aus und sendet diese an den Signalsammler 21, der die in der nächsten Netzebene gesammelten Störungsmeldungsinformationen an den Signalsammler 31 weitergibt. In der zentralen Datenverarbeitungseinrichtung können die Informationen sichtbar gemacht und dokumentiert werden. Von hier werden dann Maßnahmen zur Beseitigung der Störung eingeleitet.

Soweit hat das Signalsammel-Netz die Funktion einer Signalisierungseinrichtung.

Für eine Überwachung der Geräte 51—55 hinsichtlich bestimmter Qualitätsmerkmale werden neben den Störungsmeldungsinformationen auch laufend Meßwerte übertragen und ausgewertet.

Zu diesem Zweck ist eine Signal-Registriereinrichtung 11a, 12a in das Signalsammelnetz integriert. Jedem Signalsammler der untersten Netzebene ist eine Signal-Registriereinrichtung zugeordnet. Die Meßwerte werden während des Betriebes durch die Signalsammler von den Geräten abgefragt und in der Speichervorrichtung laufend registriert. Die Signalregistriereinrichtung 11a erhält Telegramme von den Geräten 51—55 unreduziert über den Meldebus 63a.

Bild 2 zeigt eine Variante der oben beschriebenen Anordnung, bei der die Daten von Signalsammler 11 verändert (z.B. nur Meßinformation) oder unverändert über den Anschluß a an die Signalregistriereinrichtung abgegeben werden. Die Telegramme enthalten neben Gerätekennungen, Steuersignalen und Störungsmeldungen auch noch Meßwerte. Im speziellen Beispiel sind es die jeweils 1 Sekunde aufgelaufenen Codefehler des 2-Mbit-Signals in den Leitungsendgeräten 51—55. Die Meßinformation wird im Normalfall vom Signalsammler 11, 12 nicht an den zugeordneten Signalsammler 21 der nächst höheren Netzebene weitergegeben. Die Auswerte- und Speichervorrichtung wertet die im Telegramm enthaltene Meßinformation, insbesondere Codefehler, die im Leitungsendgerät laufend erfaßt werden, aus und speichert das Ergebnis in bestimmten Zeitabschnitten, z.B. 1 Stunde, ab. Bei der Auswertung kann es in manchen Fällen nützlich sein, die Störungsmeldungen mit zu registrieren, obwohl diese Aufgabe vornehmlich von der Zentrale 32 wahrgenommen wird. Die Auswertung der Meßergebnisse geschieht vorzugsweise in der Signalregistriereinrichtung 11a, 12a. Es können auch Gerätekennungen (z.B. Betriebseinstellung, Bestückung) abgespeichert werden. Die Daten werden vorzugsweise so ausgewertet, daß sie zu den Anforderungen einer vorgegebenen Spezifikation direkt in Beziehung gesetzt werden können. Die so z.B. über mehrere Tage gespeicherten Daten können dann nach Bedarf, mit einem Befehl der Zentrale 32 über den Anschluß b des Signalsammlers 11 bzw. 12 oder den vom Signalsammler 31 kommenden Bus c abgerufen, über den Datenbus c zum Signalsammler 31 und von dort zur Datenverarbeitungseinrichtung 32 gelangen. Der bidirektionale Anschluß b ermöglicht es auch, daß Auswertungsergebnisse von der Vorrichtung 11a bzw. 12a als Störungsmeldung über den Signalsammler 11 bzw. 12 weitergegeben werden. Die Dokumentation und Auswertung der in der Vorrichtung 11a bzw. 12a gespeicherten Daten kann auch von einer besonderen Zentrale 33 über einen dafür vorgesehenen Datenbus d erfolgen.

Es kann nützlich sein aus den Meßdaten zusätzlich Störungs, meldungen abzuleiten, die dann am bidirektionalen Anschluß b wie andere Störungsmeldungen in das Signalsammel-Netz eingegeben und zur Datenverarbeitungseinrichtung übertragen werden können. Die Ausgabe und Dokumentation der in der Signalregistriereinrichtung gespeicherten Daten kann auch in einer besonders für diesen Zweck vorgesehenen Datenverarbeitungseinrichtung erfolgen, die über den Datenbus d an die Signalregistriereinrichtungen angeschlossen ist. Darüber hinaus hat die Signalregisriereinrichtung einen Anschluß PC für Personalcomputer, so daß, insbesondere zu Testzweken, die Daten auch direkt am Signalsammler abgerufen und dokumentiert werden können.

Die Signalregistriereinrichtung ist vorzugsweise eine Baugruppe, die zusammen mit den zu überwachenden Geräten und dem Signalsammler eine Baueinheit, insbesondere ein Gestell der Bauweise 7R darstellt. Das Gestell kann dann nach Bedarf mit der Signalregistriereinrichtung bestückt werden. Die Auswerte- und Speichervorrichtung bildet eine Registriereinrichtung, die insbesondere zugleich für mehrere Übertragungssysteme vorgesehen und in eine Gestelleinheit, insbesondere in Bauweise 7R integriert ist. Beim System PCM 30 G kommt eine Registriereinrichtung zweckmäßigerweise auf bis zu 30 Systeme.

Die Signalregistriereinrichtung ist im Gegensatz zu den Signalsammlern speziell auf den zu überwachenden Gerätetyp zugeschnitten. Dabei kann für viele Gerätetypen die gleiche Mikroprozessor-Baugruppe Verwendung finden. Die Anpassung an die speziellen Anforderungen erfolgt dann durch das Auswerteprogramm.

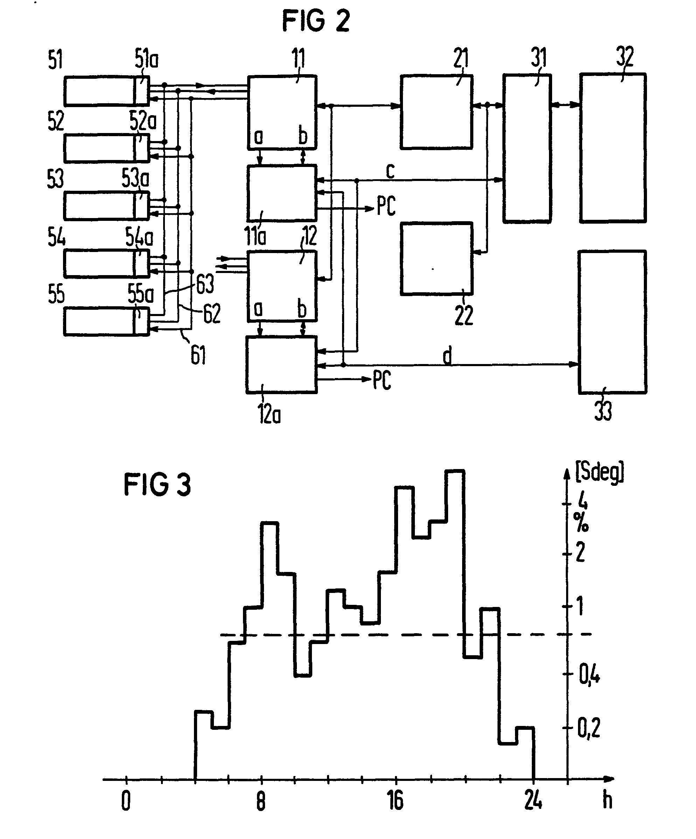

Fig. 3 zeigt ein Beispiel für eine Auswertung von Meßwerten. Dokumentiert ist hier der Erwartungswert des Anteils (Sdeg) der durch einen oder mehrere Bitfehler gestörten Sekunden in den 64-kbit-Kanälen, abgeleitet aus den Codefehlern im 2-Mbit-Signal über der Uhrzeit h für einen Tag. Es ist zusätzlich der Mittelwert M für den Erwartungswert des Anteils der gestörten Sekunden in der Signalregistriereinrichtung berechnet worden, der in diesem Fall den vorgegebenen Höchstwert von 0,4% überschreitet. Außerdem könnte eine Höchstmarke für die stündlichen Werte eingezeichnet werden. Das Dokument kann mit Angaben des Datums und Meßortes und mit der Nummer des Systems versehen werden.

Im beschriebenen Beispiel werden sekundlich Meßwerte ermittelt. Die Signalübertragungseinrichtung ist dennoch hinsichtlich der Datenübertragungskapazität, die z.B. etwa 19,2 kbaud zwischen den Signalsammlern beträgt, nicht überfordert. Da die Meßdaten ohnehin nur bei Bedarf (z.B. Hinweis eines Kunden, Wartung) ausgewertet zu werden braucht, ist die Speicherung von besonderem Vorteil.

**Patentansprüche**

1. Anordnung zum Sammeln von Überwachungsinformationen in Übertragungseinrichtungen der elektrischen Nachrichtenübertragungstechnik, mit Baueinheiten (51 . . . 55), die Überwachungsvorrichtungen (51a . . . 55a) mit Informationsgebern für Überwachungsinformationen enthalten, mit wenigstens einem Signalsammler (11, 12), an den Informationsgeber und eine eigene Auswerte- und Speichervorrichtung angeschlossen sind und wobei die vom Signalsammler erfaßten Überwachungsinformationen Störungsmeldungen und Meßwerte sind und Störungsmeldungen einer Signalisierungseinrichtung zugeführt werden, dadurch gekennzeichnet, daß die Überwachungsinformationen von Signalsammlern, die Stationen einer Signalsammeleinrichtung mit einer Zentralstation (3) zur zentralen Betriebsbeobachtung sind, laufend erfaßt werden, daß wenigstens bei einem der Signalsammler (11, 12) Überwachungsinformationen der Auswerte- und Speichervorrichtung laufend zugeführt werden und daß die Speichervorrichtung (11a, 12a) jeweils derart durch die Überwachungs informationen zyklisch überschrieben wird, daß jeweils eine sich über einen vorgegebenen Zeitraum erstreckende Folge von Überwachungsinformationen gespeichert ist.

2. Anordnung nach Anspruch 1, dadurch gekennzeichnet, daß die Auswerte- und Speichervorrichtung an einen von den zu überwachenden Geräten zum Signalsammler führenden Datenbus angeschlossen ist.

3. Anordnung nach Anspruch 1, dadurch gekennzeichnet, daß die Auswerte- und Speichervorrichtung jeweils an den Signalsammler angeschlossen ist.

4. Anordnung nach Anspruch 2 oder 3, dadurch gekennzeichnet, daß die Auswerte- und Speichervorrichtung zusammen mit zu überwachenden Baueinheiten in ein und dieselbe Aufnahmevorrichtung einsetzbar ist.

5. Anordnung nach einem der Ansprüche 1 bis 4, dadurch gekennzeichnet, daß die in die Speichervorrichtungen (11a, 12a) gespeicherten Überwachungsinformationen über ein eigenes Meßwertübertragungsnetz bei Bedarf zu der zur zentralen Meßwertbeobachtung dienenden Zentralstation übertragen werden.

6. Anordnung nach einem der Ansprüche 1 bis 5, dadurch gekennzeichnet, daß die Zentralstation zur Störungsmeldungsbeobachtung und die Zentralstation zur Meßwertbeobachtung eine gemeinsame zentrale Einrichtung (31) zur Ablaufsteuerung aufweisen.

7. Anordnung nach einem der Ansprüche 1 bis 6, dadurch gekennzeichnet, daß die Signalsammeleinrichtung mehrere Ebenen eines Signalsammelnetzes aufweist und daß der Meßwertbus unmittelbar an eine Zentralstation angeschlossen ist.

8. Anordnung nach einem der Ansprüche 1 bis 7, dadurch gekennzeichnet, daß die Baueinheiten (51 . . . 55) bei einem Aufruf Impulstelegramme wählbarer Länge abgeben, die eigene Informationsblöcke für die Störungsmeldungsinformationen und für die Meßwerte aufweisen.

9. Anordnung nach einem der Ansprüche 2 bis 8, dadurch gekennzeichnet, daß die Signalsammler mit Signalisierungsbaugruppen baulich vereinigt sind, die ein streifenartiges Signalfeld bilden und daß die Auswerte- und Speichervorrichtungen mit den Signalisierungsbaugruppen benachbart angeordneten Testbaugruppen baulich vereinigt sind, die ein Testfeld bilden.

10. Anordnung nach einem der Ansprüche 1 bis 9, dadurch gekennzeichnet, daß die Zentrale zu Zeiten, in denen keine Störungsmeldungen vorliegen, eine Übermittlung von Meßwerten über die Signalsammeleinrichtung veranlaßt, wobei dann per Interrupt sichergestellt wird, daß die Übertragung von Störungsmeldungen Vorrang hat.

11. Anordnung nach einem der vorhergehenden Ansprüche, dadurch gekennzeichnet, daß auch Gerätekennungen speicherbar sind.

## Revendications

1. Dispositif pour collecter des informations de contrôle dans des dispositifs de transmission de la technique électrique de transmission d'informations, comportant des modules (51 . . . 55), qui contiennent des dispositifs de contrôle (51a . . . 55a) contenant des générateurs d'informations de contrôle, et comportant au moins un collecteur de signaux (11, 12), auquel sont raccordés des générateurs d'informations et un dispositif particulier d'évaluation et de mémoire, et dans lequel les informations de contrôle collectées par le collecteur de signaux sont des signalisations de perturbations des valeurs de mesure, et des signalisations de perturbations sont envoyées à un dispositif de signalisation, caractérisé par le fait que les informations de contrôle sont collectées en permanence par des collecteurs de signaux qui sont des postes d'un dispositif de collecte de signaux possédant un poste central (3) servant à réaliser une opération d'observation centrale du fonctionnement, que des informations de contrôle du dispositif d'évaluation et de mémoire sont envoyées en permanence à l'un des collecteurs de signaux (11, 12) et qu'il se produit un enregistrement cyclique d'informations de contrôle en superposition dans le dispositif de mémoire (11a, 12a), de sorte qu'une suite d'informations de contrôle, qui s'étend sur un intervalle de temps prédéterminé, est respectivement mémorisée.

2. Dispositif suivant la revendication 1, caractérisé par le fait que le dispositif d'évaluation et de mémoire est raccordé à un bus de transmission de données, qui relie les appareils à contrôler au collecteur de signaux.

3. Dispositif suivant la revendication 1, caractérisé par le fait que le dispositif d'évaluation et de mémoire est raccordé respectivement au collecteur de signaux.

4. Dispositif selon la revendication 2 ou 3, caractérisé par le fait que le dispositif d'évaluation et de mémoire peut être utilisé, conjointement avec des modules devant être contrôlés, dans un même dispositif de réception.

5. Dispositif suivant l'une des revendications 1 à 4, caractérisé par le fait que les informations de contrôle mémorisées dans les dispositifs de mémoire (11a, 12a) sont transmises, le cas échéant, par l'intermédiaire d'un réseau particulier de transmission de valeurs de mesure au poste central utilisé pour l'observation centrale des valeurs de mesure.

6. Dispositif suivant l'une des revendications 1 à 5, caractérisé par le fait que le poste central utilisé pour l'observation de signalisations de perturbations et le poste central utilisé pour l'observation des valeurs de mesure possèdent un dispositif central commun (31) pour la commande d'exécution.

7. Dispositif suivant l'une des revendications 1 à 6, caractérisé par le fait que le dispositif de collecte des signaux comporte plusieurs plans d'un réseau de collecte de signaux, et que le bus de transmission des valeurs de mesure est raccordé directement à un poste central.

8. Dispositif suivant l'une des revendications 1 à 7, caractérisé par le fait que les modules (51 ... 55) délivrent, lors d'un appel, des télégrammes d'impulsions possédant une longueur pouvant être sélectionnée, qui possèdent des blocs particuliers d'informations pour les informations de signalisation de perturbations, les valeurs de mesure.

9. Dispositif selon l'une des revendications 2 à 8, caractérisé' par le fait que les collecteurs de signaux sont réunis, du point de vue construction, à des modules de signalisation, qui forment un champ de transmission de signaux en forme de bande, et que les dispositifs d'évaluation et de mémoire sont réunis, du point de vue construction, aux modules d'essai, qui sont disposés au voisinage des modules de signalisation et forment un panneau de contrôle.

10. Dispositif suivant l'une des revendications 1 à 9, caractérisé par le fait que le central déclenche, à des instants auxquels aucune signalisation de perturbation n'est présente, une prise en charge de valeurs de mesure par l'intermédiaire du dispositif de collecte des signaux, auquel cas il est garanti, lors de chaque interruption, que la transmission de signalisations de perturbations est prioritaire.

11. Dispositif suivant l'une des revendications précédentes, caractérisé par le fait que des caractéristiques d'appareils peuvent être également mémorisées.

**Claims**

1. Arrangement for collecting monitoring information in transmission systems employing electrical communication transmission technology, having units (51 ... 55) which contain the monitoring devices (51a ... 55a) with information generators for monitoring information, having at least one signal collector (11, 12), to which information generators and a separate analysis and storage device are connected, and in which the monitoring information detected by the signal collector are disturbance messages and measured values, and disturbance messages are fed to a signalling device, characterized in that the monitoring information is detected continuously by signal collectors, which are stations of a signal collecting device with a central station (3) for central observation of operation, in that, at least for one of the signal collectors (11, 12), monitoring information of the analysis and storage device is continuously fed, and in that the storage device (11a, 12a) is in each case cyclically overwritten by the monitoring information in such a way that in each case a stream of monitoring information extending over a given period is stored.

2. Arrangement according to Claim 1, characterized in that the analysis and storage device is connected to a data bus which leads from the devices to be monitored to the signal collector.

3. Arrangement according to Claim 1, characterized in that each analysis and storage device is connected to the signal collector.

4. Arrangement according to Claim 2 or 3, characterized in that the analysis and storage device can be inserted together with units to be monitored into one and the same accommodating device.

5. Arrangement according to one of Claims 1 to 4, characterized in that the monitoring information stored in the storage devices (11a, 12a) is transmitted as and when required via a separate measured value transmission network to the central station used for central measured value observation.

6. Arrangement according to one of Claims 1 to 5, characterized in that the central station for disturbance message observation and the central station for measured value observation have a common central device (31) for flow control.

7. Arrangement according to one of Claims 1 to 6, characterized in that the signal collecting device has a plurality of levels of a signal collecting network, and in that the measured value bus is directly connected to a central station.

8. Arrangement according to one of Claims 1 to 7, characterized in that, when called up, the units (51 ... 55) output pulse telegrams of selectable length which have separate information blocks for the disturbance message information and for the measured values.

9. Arrangement according to one of Claims 2 to 8, characterized in that the signal collectors are structurally combined with signalling assemblies, which form a strip-like signal zone, and in that the analysis and storage devices are structurally combined with test assemblies which are arranged adjacent to the signalling assemblies, which form a test zone.

10. Arrangement according to one of Claims 1 to 9, characterized in that the central control initiates a transfer of measured values via the signal collecting device at times when there are no disturbance messages, whereby it is ensured by means of an interrupt that the transmission of disturbance messages has priority.

11. Arrangement according to one of the preceding claims, characterized in that it is also possible to store device codes.

# FIG 1

## FIG 2

## FIG 3